(19) **Europäisches Patentamt / European Patent Office / Office européen des brevets**

(11) **EP 4 098 909 A1**

(12) **EUROPEAN PATENT APPLICATION**
published in accordance with Art. 153(4) EPC

(43) Date of publication:
**07.12.2022 Bulletin 2022/49**

(21) Application number: **20924651.1**

(22) Date of filing: **09.03.2020**

(51) International Patent Classification (IPC):
**F16H 3/42** *(2006.01)*    **F16H 3/76** *(2006.01)*
**F16H 59/06** *(2006.01)*

(86) International application number:
**PCT/CN2020/078465**

(87) International publication number:
**WO 2021/179134 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **WANG, Xing**
**Shenzhen, Guangdong 518129 (CN)**

• **LIU, Fengyu**
**Shenzhen, Guangdong 518129 (CN)**
• **LI, Jie**
**Shenzhen, Guangdong 518129 (CN)**
• **LU, Yue**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **TRANSMISSION DEVICE AND CONTROL METHOD THEREFOR, AND STEERING SYSTEM AND CONTROL METHOD THEREFOR**

(57) Embodiments of this application provide a speed shifting apparatus, a control method thereof, a steering system, and a control method thereof, and relate to the field of mechanical transmission technologies. The speed shifting apparatus includes: an outer rotating wheel; an inner rotating wheel, where a rotation axis of the inner rotating wheel is parallel to and different from a rotation axis of the outer rotating wheel; and a plurality of meshing members, arranged along a circumferential direction of the inner rotating wheel or the outer rotating wheel. Either of the outer rotating wheel and the inner rotating wheel is provided with a plurality of sliding grooves, and the plurality of sliding grooves are in a one-to-one correspondence with the plurality of meshing members. The other rotating wheel is provided with fixed meshing teeth for meshing with the meshing members. The meshing member is capable of sliding along a corresponding sliding groove, and a distance between the meshing member and the rotation axis of the inner rotating wheel gradually decreases when the meshing member slides from a first end to a second end of the sliding groove.

FIG. 2

EP 4 098 909 A1

## Description

## TECHNICAL FIELD

This application relates to the field of mechanical transmission technologies, and in particular, to a speed shifting apparatus, a transmission control method, a steering system, and a steering control method.

## BACKGROUND

A gearbox is a very important part of a vehicle, and has main functions including changing a transmission ratio to increase torque and a rotation speed of a drive wheel; changing a direction of vehicle power transmission to achieve reverse; interrupting power transmission to achieve neutral gear, and the like. After more than 100 years of development, the gearbox has changed from an original manual gearbox, to a hydraulic automatic gearbox and an electronically controlled mechanical automatic gearbox, and then to a current continuously variable gearbox. This has made the gearbox change smoother, a system more fuel-efficient, and impact during shifting smaller, while implementing functions and reducing operating intensity of a driver.

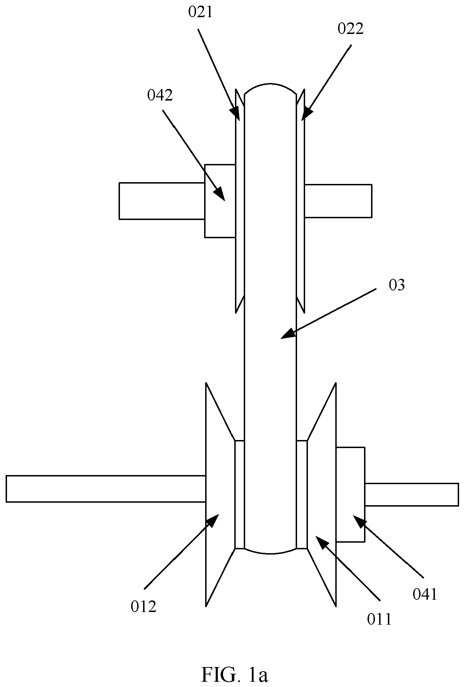

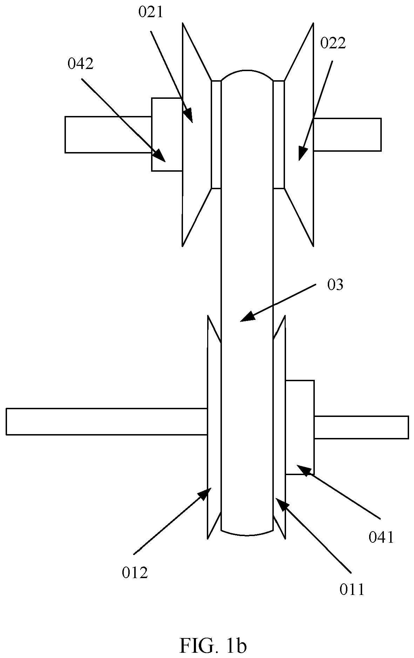

Currently, there are mainly two types of existing speed shifting apparatuses. One type is a gear meshing speed shifting apparatus, including an automatic transmission (Automated Transmission, AT), a manual transmission (Mechanical transmission, MT), an electronically controlled mechanical automatic transmission (Automated Mechanical Transmission, AMT), and a dual-clutch transmission (Dual-clutch Transmission, DCT). This type of speed shifting apparatus mainly realizes transmission of power through mutual meshing of gear sets, and a transmission ratio and a transmission direction are changed through meshing of gear sets of different specifications. Because a quantity of teeth of each gear is fixed, the transmission ratio between the gear sets is fixed. This easily causes impact in shifting of gears. Through arrangement of more gear sets, a transmission ratio difference between gears can be reduced, and the impact in shifting of gears can be reduced. However, due to limitation of a size of a gearbox, it is impossible to add more gear sets in the limited space. As a result, development of the gear meshing speed shifting apparatus has encountered a bottleneck. The other type is a friction-type continuously variable speed shifting apparatus, mainly a continuously variable transmission (Continuously Variable Transmission, CVT). Referring to FIG. 1a and FIG. 1b, the CVT speed shifting apparatus includes two pairs of pulley assemblies and steel belts. To be specific, a main pulley assembly includes a first movable pulley 011 and a first fixed pulley 012 arranged opposite to each other in a V-shaped structure. A secondary pulley assembly includes a second movable pulley 021 and a second fixed pulley 022 arranged opposite to each other in a V-shaped structure. The main pulley assembly and the secondary pulley assembly are connected by a steel belt 03. A first pressure chamber 041 is provided at a position close to the first movable pulley 011. A thrust force is applied to the first movable pulley 011 by oil pressure in the first pressure chamber 041, to change a spacing between the first movable pulley 011 and the first fixed pulley 012. A second pressure chamber 042 is provided at a position close to the second movable pulley 021. A thrust force is applied to the second movable pulley 021 by oil pressure in the second pressure chamber 042, to change a spacing between the second movable pulley 021 and the second fixed pulley 022. Referring to FIG. 1a, when the oil pressure in the second pressure chamber 042 acts on the second movable pulley 021, the second movable pulley 021 approaches the second fixed pulley 022, pushing the steel belt 03 to move in a direction approaching outer edges of the second movable pulley 021 and the second fixed pulley 022, and the first movable pulley 011 moves away from the first fixed pulley 012. This causes an operating radius of the steel belt 03 on the main pulley assembly to be increased, and the speed shifting apparatus is in a high-speed state. Referring to FIG. 1b, when the oil pressure in the first pressure chamber 041 acts on the first movable pulley 011, the first movable pulley 011 approaches the first fixed pulley 012, pushing the steel belt 03 to move in a direction approaching outer edges of the first movable pulley 011 and the first fixed pulley 012, and the second movable pulley 021 moves away from the second fixed pulley 022. This causes the operating radius of the steel belt 03 on the main pulley assembly to be reduced, and the speed shifting apparatus is in a low-speed state. Because changes in the spacing between the first movable pulley 011 and the first fixed pulley 012 are continuous, and changes in the spacing between the second movable pulley 021 and the second fixed pulley 022 are also continuous, the CVT speed shifting apparatus is a speed shifting apparatus that can continuously obtain any transmission ratio within a transmission range, that is, a continuously variable speed shifting apparatus. When the continuously variable speed shifting apparatus is applied to an automobile, gear shifting can be very smooth without sudden jump feeling, thereby improving comfort.

However, in the continuously variable speed shifting apparatus, the main pulley assembly and the secondary pulley assembly are driven by the steel belt, that is, power is transmitted by a frictional force between the steel belt and the main pulley assembly and the secondary pulley assembly, and when transmitted torque is relatively large, slippage easily occurs on a friction surface. As a result, the continuously variable speed shifting apparatus cannot transmit large torque power.

## SUMMARY

Embodiments of this application provide a speed shifting apparatus, a transmission control method, a steering system, and a steering control method. A main objective is to provide a speed shifting apparatus that uses mesh transmission, to increase transmission power compared with friction transmission, and prevent slippage from easily occurring in a power transmission process.

To achieve the foregoing objective, the following technical solutions are used in the embodiments of this application:

According to a first aspect, this application provides a speed shifting apparatus. The speed shifting apparatus includes:

an outer rotating wheel;
an inner rotating wheel, located inside the outer rotating wheel, where a rotation axis of the inner rotating wheel is parallel to and different from a rotation axis of the outer rotating wheel; and
a plurality of meshing members, located between opposite side surfaces of the inner rotating wheel and the outer rotating wheel and arranged along a circumferential direction of the inner rotating wheel or the outer rotating wheel.

Either of the outer rotating wheel and the inner rotating wheel is provided with a plurality of sliding grooves, and the plurality of sliding grooves are in a one-to-one correspondence with the plurality of meshing members. The other rotating wheel is provided with fixed meshing teeth for meshing with the meshing members. The fixed meshing teeth extend in a direction consistent with an extension direction of the sliding groove.

The meshing member is capable of sliding along a corresponding sliding groove, and a distance between the meshing member and the rotation axis of the inner rotating wheel gradually decreases when the meshing member slides from a first end to a second end of the sliding groove.

In the speed shifting apparatus provided in this embodiment of this application, the outer rotating wheel and the inner rotating wheel achieve internal meshing transmission by using the meshing member and the fixed meshing teeth that are meshed with each other, and the meshing member may slide along the sliding groove. In addition, the distance between the meshing member and the rotation axis of the inner rotating wheel gradually decreases when the meshing member slides from the first end to the second end of the sliding groove. To be specific, when the meshing member slides to the first end, a transmission ratio between the inner rotating wheel and the outer rotating wheel is $i=1+X/L1$, where X is a distance between the rotation axis of the inner rotating wheel and the rotation axis of the outer rotating wheel, and L1 is a distance from a position of the first end to the rotation axis of the inner rotating wheel. When the meshing member slides to the second end, the transmission ratio between the inner rotating wheel and the outer rotating wheel is $i=1+X/L2$, where L2 is a distance from a position of the second end to the rotation axis of the inner rotating wheel. In other words, the transmission ratio between the inner rotating wheel and the outer rotating wheel is $i=1+X/Lx$, where Lx is a distance from any position between the first end and the second end to the rotation axis of the inner rotating wheel. When the meshing member moves between the first end and the second end, a distance between a position of the meshing member and the rotation axis of the inner rotating wheel continuously changes. Therefore, the transmission ratio between the inner rotating wheel and the outer rotating wheel continuously changes. In other words, from the first end to the second end, the transmission ratio between the inner rotating wheel and the outer rotating wheel gradually increases. In this case, the speed shifting apparatus can achieve a continuously variable speed. In addition, power transmission between the inner rotating wheel and the outer rotating wheel of the speed shifting apparatus is transmitted through meshing transmission. Compared with existing friction transmission, the meshing transmission not only has higher speed shifting efficiency, but also is less prone to slippage in a process of transmitting relatively large power. Therefore, the speed shifting apparatus provided in this embodiment of this application is applicable to a torque environment with a relatively large load.

In a possible implementation of the first aspect, along the first end to the second end of the sliding groove, both a radial size of the inner rotating wheel and a radial size of the outer rotating wheel gradually decrease, and along the first end to the second end of the sliding groove, a groove depth of the sliding groove gradually becomes shallower. The radial size of the inner rotating wheel and the radial size of the outer rotating wheel are both designed to gradually decrease, so that the distance from the meshing member to the rotation axis of the inner rotating wheel gradually decreases along the direction from the first end to the second end. In addition, along the first end to the second end, the groove depth of the sliding groove gradually becomes shallower, so that the meshing member can achieve meshing transmission with the fixed meshing teeth regardless of being located at the first end, the second end, or another position between the first end and the second end.

In a possible implementation of the first aspect, the speed shifting apparatus further includes: a plurality of speed shifting rods, where the plurality of speed shifting rods are in a one-to-one correspondence with the plurality of meshing members; and an adjusting ring, disposed inside the inner rotating wheel, where a central axis of the adjusting ring is coaxial with the rotation axis of the inner rotating wheel, the adjusting ring is connected to a first drive source, an axis of an output shaft of the first drive source is coaxial with the rotation axis of the inner rotating wheel, and the first drive source is capable of driving the adjusting ring to move along a direction of the rotation axis of the inner rotating wheel. The sliding groove is provided on the inner rotating wheel, one end of any speed shifting rod is connected to a corresponding meshing member, and the other end is connected to the adjusting ring. When the first drive source drives the adjusting ring to move along the direction of the rotation axis of the inner rotating wheel, the speed shifting rod and the adjusting ring move synchronously along the direction of the rotation axis of the inner rotating wheel. The speed shifting rod is relatively fixed to the adjusting ring along a circumferential direction of the adjusting ring, and the adjusting ring and the speed shifting rod is capable of rotating synchronously around a circumferential direction of the output shaft of the first drive source.

The plurality of speed shifting rods are connected to the plurality of corresponding meshing members in a one-to-one correspondence, and the speed shifting rod is connected to the adjusting ring that is connected to the first drive source, so that one first drive source can drive the adjusting ring to move. Further, the plurality of speed shifting rods drive all the meshing members to move synchronously in the corresponding sliding groove. Compared with use of a plurality of drive sources to respectively correspondingly drive a plurality of meshing members to move, this implementation can simplify a structure of the entire speed shifting apparatus, and can easily control all the meshing members to move synchronously.

In addition, in a running process of the speed shifting apparatus, the meshing member not only slides in the sliding groove, but also needs to rotate synchronously with the inner rotating wheel. To achieve synchronous rotation of the meshing member and the inner rotating wheel, this application provides the following embodiment: The speed shifting rod is relatively fixed to the adjusting ring along the circumferential direction of the adjusting ring. The adjusting ring and the speed shifting rod are capable of rotating synchronously around the circumferential direction of the output shaft of the first drive source. In other words, the adjusting ring is driven by the first drive source, and the speed shifting rod, the meshing member connected to the speed shifting rod, and the adjusting ring rotate synchronously around the circumferential direction of the output shaft of the first drive source. In this way, synchronous rotation of the meshing member and the inner rotating wheel can be achieved.

In a possible implementation of the first aspect, the speed shifting apparatus further includes: a shaft sleeve, disposed inside the inner rotating wheel, where the shaft sleeve is relatively fixed to the inner rotating wheel, and an axis of the shaft sleeve is coaxial with the rotation axis of the inner rotating wheel; and a sliding shaft, slidably disposed inside the shaft sleeve, where the sliding shaft is connected to the output shaft of the first drive source, the adjusting ring is rotatably sleeved outside the shaft sleeve and is connected to the sliding shaft by using a connecting pin, and a first end of the connecting pin is relatively fixed to the adjusting ring. A clamping groove for a second end of the connecting pin to slide is provided in a circumferential direction of the sliding shaft. The connecting pin rotates along the clamping groove when the speed shifting rod and the adjusting ring

ring rotate synchronously around the shaft sleeve. The shaft sleeve is provided with a guiding groove for the second end of the connecting pin to move along an axial direction of the shaft sleeve. The connecting pin moves along the guiding groove when the first drive source drives the sliding shaft to move along the axial direction of the shaft sleeve, so that the adjusting ring and the speed shifting rod move synchronously along the axial direction of the shaft sleeve, and the first end of the connecting pin is opposite to the second end of the connecting pin.

When the adjusting ring is disposed inside the inner rotating wheel, the first drive source is usually disposed outside the inner rotating wheel because a mounting space in the inner rotating wheel is limited. In this way, the adjusting ring is still ensured to move along the direction of the rotation axis of the inner rotating wheel through the shaft sleeve and the sliding shaft matching the shaft sleeve, and the speed shifting rod and the adjusting ring rotate synchronously along the circumferential direction of the sliding shaft through the rotation of the connecting pin along the clamping groove.

In a possible implementation of the first aspect, the speed shifting rod includes: a first connecting rod, where one end of the first connecting rod is connected to the meshing member, the other end of the first connecting rod is connected to a fixing base through a first hinged shaft in a hinged manner, and the fixing base is relatively fixed to the shaft sleeve; and a second connecting rod, where one end of the second connecting rod is connected to a middle part of the first connecting rod through a second hinged shaft in a hinged manner, and the other end of the second connecting rod is connected to the adjusting ring through a third hinged shaft in a hinged manner. Axes of the first hinged shaft, the second hinged shaft, and the third hinged shaft are all perpendicular to a first plane. A straight line on which the first connecting rod is located is a first straight line. A plane in which the first straight line and the axis of the shaft sleeve are co-located is the first plane. The sliding groove is an arc-shaped groove. A circle center of a circle in which the arc-shaped groove is located coincides with a rotation center of the first connecting rod relative to the fixing base. Because each first connecting rod is connected to the fixing base in a hinged manner, it can be ensured that all the meshing members rotate synchronously around the axial direction of the shaft sleeve. In addition, the sliding groove is disposed as an arc-shaped groove, so that the first connecting rod can be ensured to smoothly drive the meshing member to slide in the sliding groove.

In a possible implementation of the first aspect, the speed shifting apparatus further includes: a plurality of speed shifting rods, where the plurality of speed shifting rods are in a one-to-one correspondence with the plurality of meshing members; and an adjusting ring, sleeved outside the outer rotating wheel, where a central axis of the adjusting ring is coaxial with the rotation axis of the outer rotating wheel, the adjusting ring is connected to a first drive source, an axis of an output shaft of the first drive source is coaxial with the rotation axis of the outer rotating wheel, and the first drive source is capable of driving the adjusting ring to move along a direction of the rotation axis of the outer rotating wheel. The sliding groove is provided on the outer rotating wheel, one end of any speed shifting rod is connected to a corresponding meshing member, and the other end is connected to the adjusting ring. When the first drive source drives the adjusting ring to move along the direction of the rotation axis of the outer rotating wheel, the speed shifting rod and the adjusting ring move synchronously along the direction of the rotation axis of the outer rotating wheel. The adjusting ring is relatively fixed to the output shaft of the first drive source, and the speed shifting rod is capable of rotating around a circumferential direction of the adjusting ring.

The plurality of speed shifting rods are connected to the plurality of corresponding meshing members in a one-to-one correspondence, and the speed shifting rod is connected to the adjusting ring that is connected to the first drive source, so that one first drive source can drive the adjusting ring to move. Further, the plurality of speed shifting rods drive all the meshing members to slide synchronously in the corresponding sliding grooves. Compared with use of a plurality of drive sources to respectively correspondingly drive a plurality of meshing members to move, this implementation can simplify a structure of the entire speed shifting apparatus, and can easily control all the meshing members to move synchronously.

In addition, in a running process of the speed shifting apparatus, the meshing member not only slides in the sliding groove, but also needs to rotate synchronously with the outer rotating wheel. To achieve synchronous rotation of the meshing member and the outer rotating wheel, this application provides the following embodiment: The adjusting ring is relatively fixed to the output shaft of the first drive source, and the speed shifting rod is capable of rotating around the circumferential direction of the adjusting ring. In other words, the adjusting ring does not rotate around the output shaft of the first drive source, but the speed shifting rod rotates around the adjusting ring, to drive the meshing member to rotate around the rotation axis of the outer rotating wheel.

In a possible implementation of the first aspect, a speed shifting groove is provided at one end of the speed shifting rod close to the adjusting ring. A groove depth of the speed shifting groove is greater than or equal to a distance between the first end and the second end along a radial direction of the outer rotating wheel. The adjusting ring is clamped in the speed shifting groove along a radial direction of the adjusting ring. The speed shifting rod is slidably engaged with the adjusting ring through the speed shifting groove, so that the speed shifting rod is capable of rotating along the circumferential direction of the adjusting ring. That the speed shifting groove is provided at the end of the speed shifting rod close to the adjusting ring, and the groove depth of the speed shifting groove is greater than or equal to the distance between the first end and the second end along the radial direction of the outer rotating wheel is: When the meshing member slides along the first end to the second end, through use of the speed shifting groove, a distance between a position at which the speed shifting rod is connected to the meshing member and a position at which the speed shifting rod is connected to the adjusting ring can gradually increase. This can ensure that the speed shifting rod and the meshing member connected to the speed shifting rod smoothly slide in the sliding groove. In addition, use of the speed shifting groove ensures that the speed shifting rod rotates along the circumferential direction of the adjusting ring.

In a possible implementation of the first aspect, a part of the meshing member extends to one side of the outer rotating wheel away from the inner rotating wheel. A rail ring is further included. The rail ring is relatively fixed to the outer rotating wheel. A plurality of rail grooves are provided along a circumferential direction of the rail ring. An extension direction of the rail groove is consistent with the extension direction of the sliding groove. One end of any speed shifting rod away from the meshing member passes through a corresponding rail groove in sequence and is connected to the adjusting ring. When the part of the meshing member extends to the side of the outer rotating wheel away from the inner rotating wheel, it is possible that not all the speed shifting rods can move synchronously along the direction of the rotation axis of the outer rotating wheel, and consequently, not all the meshing members can slide synchronously along the corresponding sliding grooves. However, the rail ring is disposed, and all the speed shifting rods pass through the rail grooves provided in the rail ring and are connected to the adjusting ring. This ensures that all the speed shifting rods slide synchronously.

In a possible implementation of the first aspect, a limiting structure is disposed at a position at which the rail ring is engaged with the speed shifting rod, and the limiting structure is configured to prevent the speed shifting rod from moving in a direction away from the rail ring. During rotation of the outer rotating wheel, the speed shifting rod and the meshing member have a centrifugal force correspondingly. The limiting structure prevents the speed shifting rod from moving in the direction away from the rail ring, to ensure that the meshing member is always in the sliding groove, and finally ensure performance of the entire speed shifting apparatus.

In a possible implementation of the first aspect, the limiting structure includes: a rail block, connected to and relatively fixed to the speed shifting rod, where the rail block is located on one side of the rail ring away from the outer rotating wheel, and the rail block abuts against the rail ring; and a pressure plate, pressed on one side of the rail block away from the rail ring, and relatively fixed to the rail ring. The pressure plate is provided with an avoidance groove. An extension direction of the avoidance groove is consistent with the extension direction of the rail groove. One end of the speed shifting rod away from the meshing member passes through the rail groove and the avoidance groove in sequence and is connected to the adjusting ring. The pressure plate is pressed against the rail block to exert pressure on the rail block towards the inside of the outer rotating wheel, to prevent the speed shifting rod from moving in the direction away from the rail ring.

In a possible implementation of the first aspect, the speed shifting apparatus further includes: a first rotating shaft, connected to the inner rotating wheel and extending to the outside of the outer rotating wheel, where an axis of the first rotating shaft is coaxial with the rotation axis of the inner rotating wheel; and a second rotating shaft, connected to the outer rotating wheel and extending to the outside of the outer rotating wheel, where an axis of the second rotating shaft is coaxial with the rotation axis of the outer rotating wheel.

According to a second aspect, this application further provides a transmission control method. The transmission control method is applied to the speed shifting apparatus according to any one of the first aspect and the implementations of the first aspect, either of the inner rotating wheel and the outer rotating wheel is an input wheel, and the other rotating wheel is an output wheel. The transmission control method includes:

when a rotation speed of the output wheel is greater than a preset rotation speed, controlling the meshing member to slide in a direction toward the first end of the sliding groove until the rotation speed of the output wheel is equal to the preset rotation speed; and when the rotation speed of the output wheel is less than the preset rotation speed, controlling the meshing member to slide in a direction toward the second end of the sliding groove until the rotation speed of the output wheel is equal to the preset rotation speed.

According to the transmission control method provided in this embodiment of this application, because the transmission control method uses the speed shifting apparatus according to any one of the foregoing technical solutions, when the rotation speed of the output wheel is greater than the preset rotation speed, the meshing member is controlled to slide in the direction toward the first end, and when the rotation speed of the output wheel is less than the preset rotation speed, the meshing member is controlled to slide in the direction toward the second end, until the rotation speed of the output wheel is equal to the preset rotation speed, to implement speed shifting of the output wheel. Meshing transmission exists between the inner rotating wheel and the outer rotating wheel, and compared with existing friction transmission, the meshing transmission not only has higher speed shifting efficiency, but also is less prone to slippage in a process of transmitting relatively large power. Therefore, the transmission control method provided in this embodiment of this application is applicable to a torque environment with a relatively large load.

According to a third aspect, this application further provides a steering system, including:

a second drive source; a steering transmission mechanism, where the second drive source drives the steering transmission mechanism to enable a steering wheel to steer, an input end of the steering transmission mechanism is connected to an output end of the second drive source, and an output end of the steering transmission mechanism is connected to the steering wheel; and a speed shifting apparatus, where the speed shifting apparatus is the speed shifting apparatus according to any one of the first aspect and the implementations of the first aspect, either of the inner rotating wheel and the outer rotating wheel is connected to the output end of the second drive source, and the other rotating wheel is connected to the input end of the steering transmission mechanism.

In the steering system provided in this embodiment of this application, because the steering system uses the speed shifting apparatus according to the implementations of the first aspect, the steering system provided in this embodiment of this application and the speed shifting apparatus according to the foregoing technical solutions can resolve a same technical problem and achieve a same expected effect.

According to a fourth aspect, this application further provides a steering control method. The steering control method is applied to the steering system according to the third aspect. The steering control method includes:

detecting steering torque of the output end of the second drive source, and determining whether the steering torque is less than preset steering torque; and when the steering torque is less than the preset steering torque, controlling the meshing member to move in a direction approaching the first end of the sliding groove, to reduce a transmission ratio between the inner rotating wheel and the outer rotating wheel, until the steering torque is greater than or equal to the preset steering torque, and controlling the second drive source to drive the steering transmission mechanism, to drive the steering wheel to steer.

According to the steering control method provided in this embodiment of this application, when the detected steering torque is less than the preset steering torque, the meshing member is controlled to slide in the direction toward the first end, so that the steering torque is greater than or equal to the preset steering torque, thereby ensuring that the steering wheel steers based on the preset steering torque.

In a possible implementation of the fourth aspect, when the steering torque is greater than or equal to the preset steering torque, the second drive source is controlled to drive the steering transmission mechanism, to drive the steering wheel to steer. If the steering torque is greater than or equal to the preset steering torque, the meshing member does not need to be driven to slide, and the second drive source drives the steering wheel to steer.

In a possible implementation of the fourth aspect, the second drive source includes a first motor and a second motor, and an output end of the first motor and an output end of the second motor are both connected to the inner rotating wheel or the outer rotating wheel of the speed shifting apparatus. Before the detecting steering torque, the method further includes: detecting an output power of the first motor and an output power of the second motor; detecting the steering torque when either of the first motor and the second motor has no output power; and when both the first motor and the second motor have output powers, controlling the steering transmission mechanism to drive the steering wheel to steer. In other words, when neither the first motor nor the second motor fails, the second drive source directly drives the steering wheel to rotate. When the first motor or the second motor fails, the steering torque is detected. Therefore, in this embodiment, even if the first motor or the second motor fails, it can still be ensured that the steering wheel is mounted at a preset angle for steering.

According to a fifth aspect, this application further provides a steering control method. The steering control method is applied to the steering system according to the third aspect. The steering control method includes: detecting a traveling speed of the steering wheel, and determining whether the traveling speed is greater than a preset speed; and when the traveling speed is greater than the preset speed, controlling the meshing member to move in a direction approaching the second end of the sliding groove, to increase a transmission ratio between the inner rotating wheel and the outer rotating wheel, so that the traveling speed of the steering wheel is less than or equal to the preset speed.

In other words, when the traveling speed of the steering wheel is greater than the preset speed, the meshing member is controlled to move in the direction approaching the second end, to increase the transmission ratio between the inner rotating wheel and the outer rotating wheel, and reduce torque. In this way, steering sensitivity of the steering wheel in a high-speed traveling state can be reduced, thereby improving a safety factor.

In a possible implementation of the fifth aspect, when it is determined that the traveling speed is less than or equal to the preset speed, a position of the meshing member is controlled, so that the transmission ratio between the inner rotating wheel and the outer rotating wheel is equal to 1. When the traveling speed of the steering wheel is less than or equal to the preset speed, the meshing member is controlled to slide, so that the transmission ratio between the inner rotating wheel and the outer rotating wheel is equal to 1, that is, the torque of the steering wheel is not changed, and it is ensured that the steering wheel is mounted at the preset angle for steering.

## BRIEF DESCRIPTION OF DRAWINGS

FIG. 1a is a schematic diagram of a working state of a speed shifting apparatus in the prior art;

FIG. 1b is a schematic diagram of a working state of a speed shifting apparatus in the prior art;

FIG. 2 is a schematic structural diagram of a speed shifting apparatus according to an embodiment of this application;

FIG. 3a is a schematic diagram of a working state of a speed shifting apparatus according to an embodiment of this application;

FIG. 3b is a schematic diagram of a working state of a speed shifting apparatus according to an embodiment of this application;

FIG. 4 is a schematic structural diagram of another speed shifting apparatus according to an embodiment of this application;

FIG. 5a is a cross-sectional view of a first end of a speed shifting apparatus after a meshing member is removed according to an embodiment of this application;

FIG. 5b is a cross-sectional view of a first end of a speed shifting apparatus according to an embodiment of this application;

FIG. 6a is a cross-sectional view of a second end of a speed shifting apparatus after a meshing member is removed according to an embodiment of this application;

FIG. 6b is a cross-sectional view of a second end a speed shifting apparatus according to an embodiment of this application;

FIG. 6c is a cross-sectional comparison diagram of a first end and a second end of a speed shifting apparatus according to an embodiment of this application;

FIG. 7a is a cross-sectional view of a first end of a speed shifting apparatus after a meshing member is removed according to an embodiment of this application;

FIG. 7b is a cross-sectional view of a first end of a speed shifting apparatus according to an embodiment of this application;

FIG. 8a is a cross-sectional view of a second end of a speed shifting apparatus after a meshing member is removed according to an embodiment of this application;

FIG. 8b is a cross-sectional view of a second end a speed shifting apparatus according to an embodiment of this application;

FIG. 8c is a cross-sectional comparison diagram of a first end and a second end of a speed shifting apparatus according to an embodiment of this application;

FIG. 9 is a schematic structural diagram of another speed shifting apparatus according to an embodiment of this application;

FIG. 10 is a cross-sectional view of FIG. 9;

FIG. 11 is a schematic diagram of a connection relationship between an inner rotating wheel and a first rotating shaft shown in FIG. 9;

FIG. 12 is a schematic diagram of a connection relationship between an outer rotating wheel and a second rotating shaft in FIG. 9;

FIG. 13 is a schematic structural diagram of a rail ring in FIG. 9;

FIG. 14a is a schematic diagram of a connection relationship between a speed shifting rod and a meshing member in FIG. 9;

FIG. 14b is a schematic diagram of another connection relationship between a speed shifting rod and a meshing member in FIG. 9;

FIG. 15 is a schematic diagram of a connection relationship between a speed shifting rod and an adjusting ring in FIG. 9;

FIG. 16 is a schematic structural diagram of another speed shifting apparatus according to an embodiment of this application;

FIG. 17 is a schematic structural diagram of an adjusting ring in FIG. 16;

FIG. 18 is a schematic structural diagram of a shaft sleeve in FIG. 16;

FIG. 19 is a schematic structural diagram of a sliding shaft in FIG. 16;

FIG. 20 is a structural block diagram of a steering system according to an embodiment of this application; and

FIG. 21 is a flowchart block diagram of a steering control method according to an embodiment of this application.

Reference numerals:

011-first movable pulley; 012-first fixed pulley; 021-second movable pulley; 022-second fixed pulley; 03-steel belt; 041-first pressure chamber; 042-second pressure chamber; 1-inner rotating wheel; 2-first rotating shaft; P1-rotation axis of the inner rotating wheel; 3-outer rotating wheel; 4-second rotating shaft; P2-rotation axis of the outer rotating wheel; A-first end; B-second end; 5-meshing member; 6-first drive source; 7-sliding groove; 8-fixed meshing teeth; 9-speed shifting rod; 901-first stop block; 902-second stop block; 903-speed shifting groove; 904-rail block; 905-first connecting rod; 906-second connecting rod; 907-first hinged shaft; 908-second hinged shaft; 909-third hinged shaft; 10-adjusting ring; 101-hinged support; 102-pin hole; 11-rail ring; 111-rail groove; 112-limiting block; 12-shaft sleeve; 121-fixing base; 122-guiding groove; 13-sliding shaft; 131-clamping groove; 14-connecting pin; 15-pressure plate; 151-avoidance slot.

## DESCRIPTION OF EMBODIMENTS

Embodiments of this application relate to a speed shifting apparatus, a transmission control method, a steering system, and a steering control method, which are described in detail below with reference to the accompanying drawings.

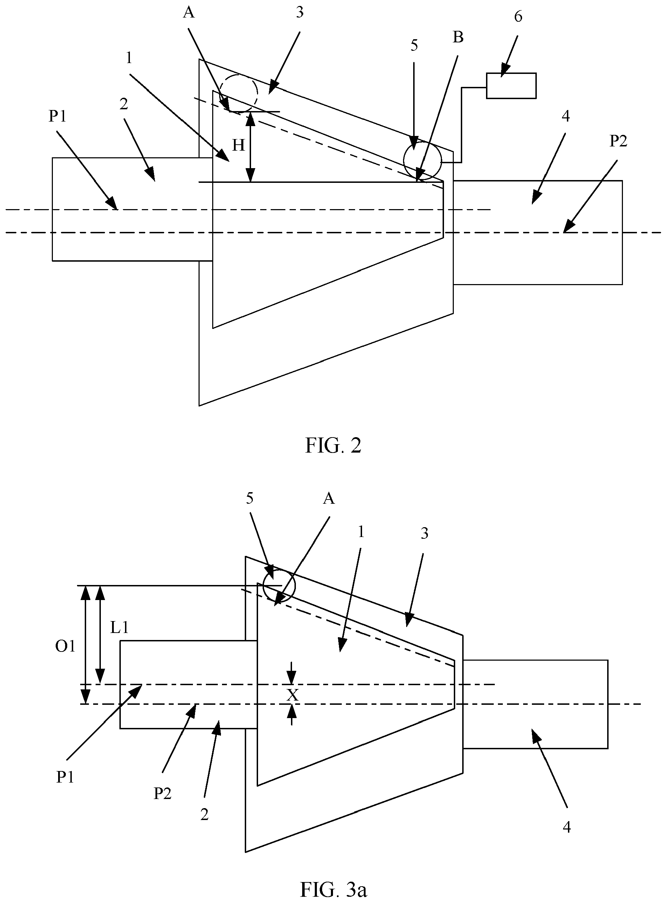

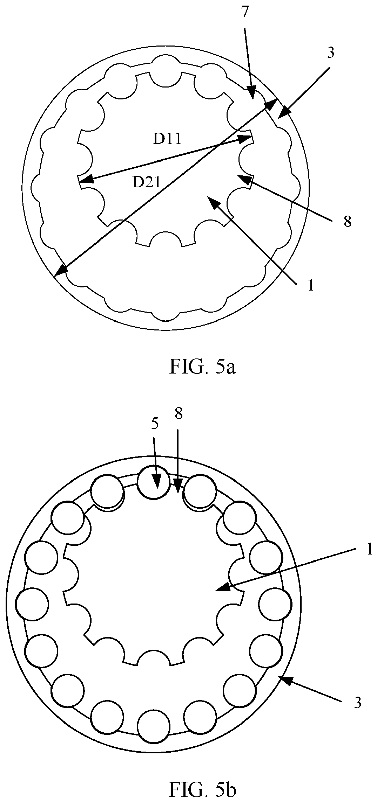

According to one aspect, the embodiments of this application provide a speed shifting apparatus. Referring to FIG. 2, FIG. 5a, and FIG. 5b, the speed shifting apparatus includes an inner rotating wheel 1, an outer rotating wheel 3, and a plurality of meshing members 5. A rotation axis P1 of the inner rotating wheel 1 is parallel to and different from a rotation axis P2 of the outer rotating wheel 3. The plurality of meshing members 5 are located between opposite side surfaces of the inner rotating wheel 1 and the outer rotating wheel 3 and arranged along a circumferential direction of the inner rotating wheel 1 or the outer rotating wheel 3. Either of the outer rotating wheel 3 and the inner rotating wheel 1 is provided with a plurality of sliding grooves 7, and the plurality of sliding grooves 7 are in a one-to-one correspondence with the plurality of meshing members 5. The other rotating wheel is provided with fixed meshing teeth 8 meshing with the meshing member 5. The fixed meshing teeth 8 extend in a direction consistent with an extension direction of the sliding groove 7. The meshing member 5 is capable of sliding along a corresponding sliding groove 7. A distance between the meshing member 5 and the rotation axis P1 of the inner rotating wheel 1 gradually decreases when the meshing member 5 slides from a first end to a second end of the sliding groove 7.

In other words, a meshing region and a non-meshing region are formed in a region between an outer surface of the inner rotating wheel 1 and an inner surface of the outer rotating wheel 1. In the meshing region, the fixed meshing teeth 8 mesh with the meshing member 5. In the non-meshing region, the fixed meshing teeth 8 are disengaged from the meshing member 5.

A working principle of the speed shifting apparatus is as follows: When either of the outer rotating wheel 3 and the inner rotating wheel 1 rotates, the other rotating wheel is driven to rotate through meshing transmission between the meshing member 5 and the fixed meshing teeth 8, to finally output torque. That is, the speed shifting apparatus uses meshing power transmission, and compared with the existing friction power transmission, can transmit large torque power and is less prone to slippage. Therefore, the speed shifting apparatus can be applied to heavy-load large-torque transmission, and the meshing power transmission has greater transmission efficiency compared with the friction power transmission, so that advantages of fast speed increase and large power can be achieved. A speed shifting principle of the speed shifting apparatus is as follows: As shown in FIG. 3a, when the meshing member 5 is at the first end A of the sliding groove and the rotating inner rotating wheel 1 drives the outer rotating wheel 3, because a linear velocity VI of the inner rotating wheel 1 is equal to a linear velocity V2 of the outer rotating wheel 3, W1L1 = W2O1 . In this case,

$$W2 = \frac{W1L1}{O1} = \frac{W1L1}{(L1+X)}$$

it is obtained that , and then a transmission ratio is obtained:

$$i1 = \frac{W1}{W2} = \frac{(L1+X)}{L1} = 1 + \frac{X}{L1}$$

. In the foregoing formula, W1 is an angular velocity of the inner rotating wheel 1, L1 is a distance from a position of the first end A of the sliding groove to the rotation axis P1 of the inner rotating wheel, W2 is an angular velocity of the outer rotating wheel 3, O1 is a distance from the position of the first end A of the sliding groove to the rotation axis P2 of the outer rotating wheel, and X is a distance from the rotation axis P1 of the inner rotating wheel to the axis P2 of the outer rotating wheel.

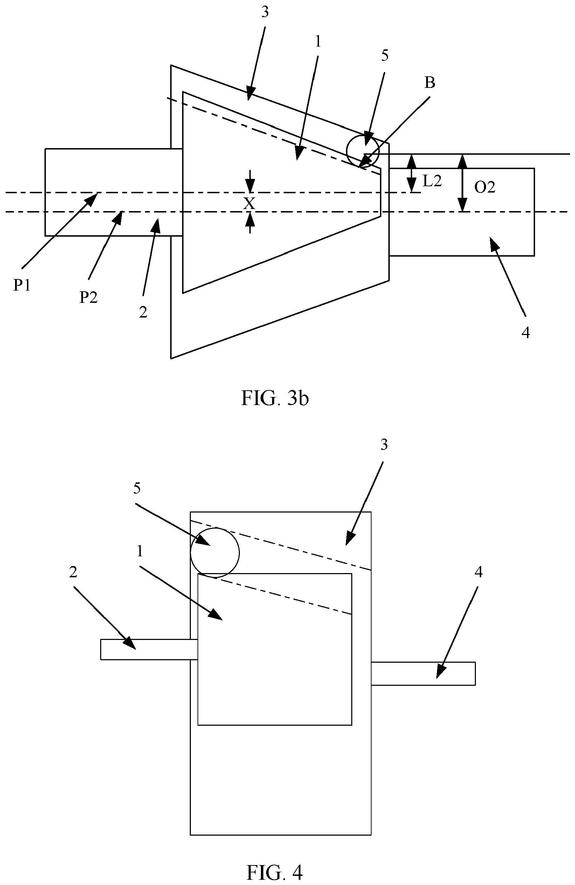

As shown in FIG. 3b, when the meshing member 5 is at the second end B of the sliding groove and the rotating inner rotating wheel 1 drives the outer rotating wheel 3, because a linear velocity VI of the inner rotating wheel 1 is equal to a linear velocity V2 of the outer rotating wheel 3, W1L2 = W2O2 . In this case, it is obtained that

$$W2 = \frac{W1L2}{O2} = \frac{W1L2}{(L2+X)}$$

, and then a transmission ratio is obtained:

$$i2 = \frac{W1}{W2} = \frac{(L2+X)}{L2} = 1 + \frac{X}{L2}$$

.

In the foregoing formula, W1 is an angular velocity of the inner rotating wheel 1, L2 is a distance from a position of the second end B of the sliding groove to the rotation axis P1 of the inner rotating wheel, W2 is an angular velocity of the outer rotating wheel 3, O2 is a distance from the position of the second end B of the sliding groove to the rotation axis P2 of the outer rotating wheel, and X is a distance from the rotation axis P1 of the inner rotating wheel to the rotation axis P2 of the outer rotating wheel.

As can be learned from the speed shifting principles shown in FIG. 3a and FIG. 3b, when the transmission ratio is

$$ix = \frac{W1}{W2} = 1 + \frac{X}{Lx}$$

, and in the formula, ix is the transmission ratio when the meshing member 5 is in any position between the first end A of the sliding groove and the second end B of the sliding groove, and Lx is a distance from any position to the rotation axis P1 of the inner rotating wheel, it can be learned from this formula that the transmission ratio is related to Lx, and because Lx changes continuously from the first end to the second end, the transmission ratio ix also changes continuously. This further indicates that the speed shifting apparatus can achieve a continuously variable speed.

When the meshing member 5 slides from the first end A of the sliding groove to the second end B of the sliding groove, the speed shifting apparatus is a deceleration apparatus. When the meshing member 5 slides from the second end B of the sliding groove to the first end A of the sliding groove, the speed shifting apparatus is an acceleration apparatus.

There are a plurality of implementations for a shape of the inner rotating wheel 1 and a shape of the outer rotating wheel 3. Two embodiments are used for description below.

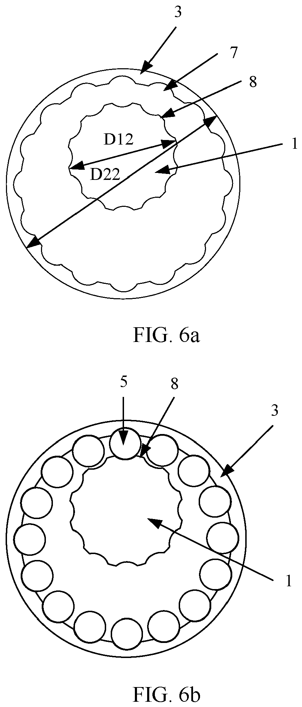

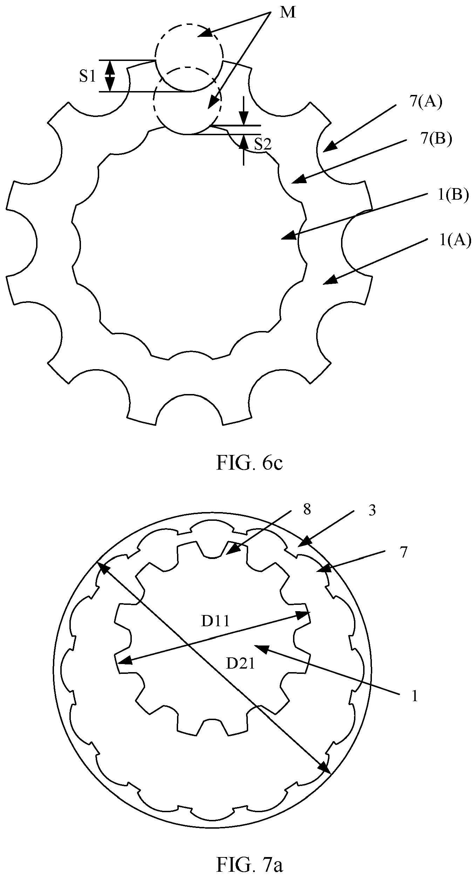

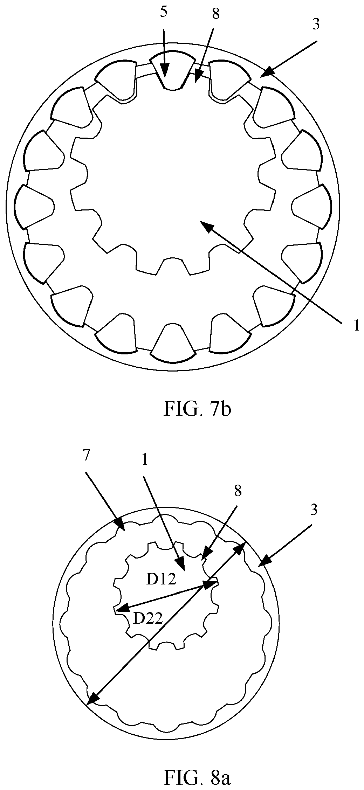

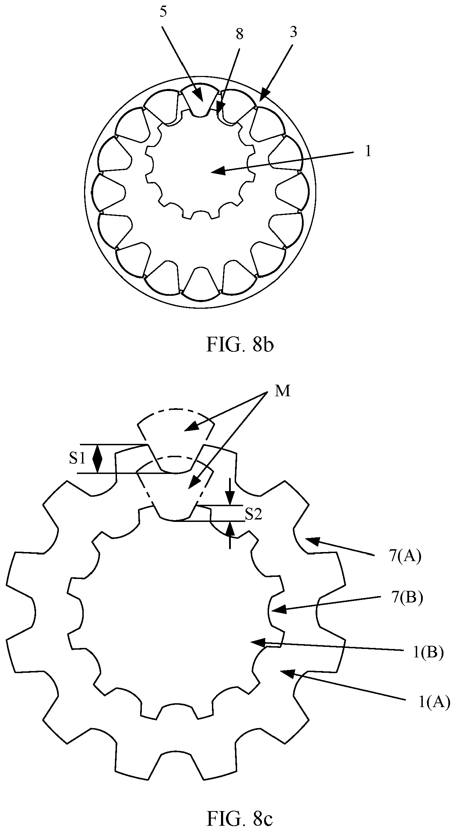

Embodiment 1: Referring to FIG. 2, along the first end A to the second end B of the sliding groove, a radial size of the inner rotating wheel 1 gradually decreases (as shown in FIG. 5a and FIG. 6a, and as shown in FIG. 7a and FIG. 8a, a diameter D11 of the inner rotating wheel 1 at the first end A is larger than a diameter D12 of the inner rotating wheel 1 at the second end B). In a direction from the first end A to the second end B, a radial size of the outer rotating wheel 3 also gradually decreases (as shown in FIG. 5a and FIG. 6a, and as shown in FIG. 7a and FIG. 8a, a diameter D21 of the outer rotating wheel 3 at the first end A is larger than a diameter D22 of the outer rotating wheel 3 at the second end B). With this structure, it is easy to achieve a gradual decrease in the distance from the meshing member 5 to the rotation axis P1 of the inner rotating wheel along the first end to the second end.

Embodiment 2: Referring to FIG. 4, both the inner rotating wheel 1 and the outer rotating wheel 3 are cylindrical structures. This can also achieve a gradual decrease in the distance from the meshing member 5 to the rotation axis P1 of the inner rotating wheel. However, compared with the structure shown in FIG. 2, this structure may increase processing and manufacturing difficulty, and therefore, is not better than the structure of the inner rotating wheel 1 and the structure of the outer rotating wheel 3 that are shown in FIG. 2 and that are provided in the embodiments of this application.

There are three embodiments described below for the disposition position of the meshing member 5.

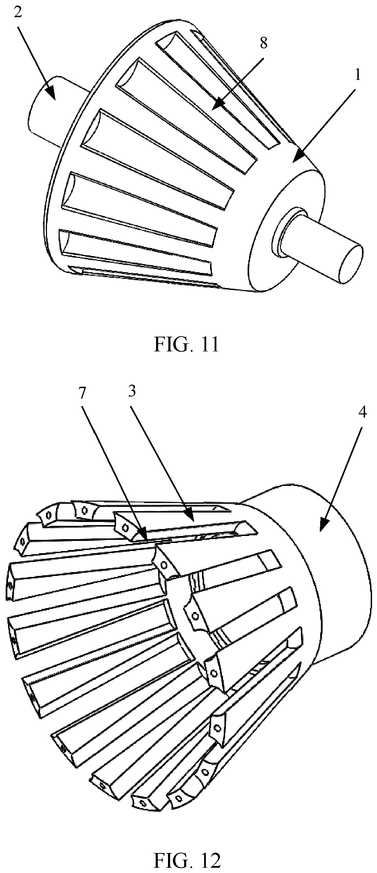

Embodiment 1: As shown in FIG. 5b and FIG. 6b, and as shown in FIG. 7b and FIG. 8b, and FIG. 11 and FIG. 12, the meshing member 5 is disposed on the outer rotating wheel 3, that is, the sliding groove 7 is provided on the outer rotating wheel 3, and the fixed meshing teeth 8 are provided on the inner rotating wheel 1.

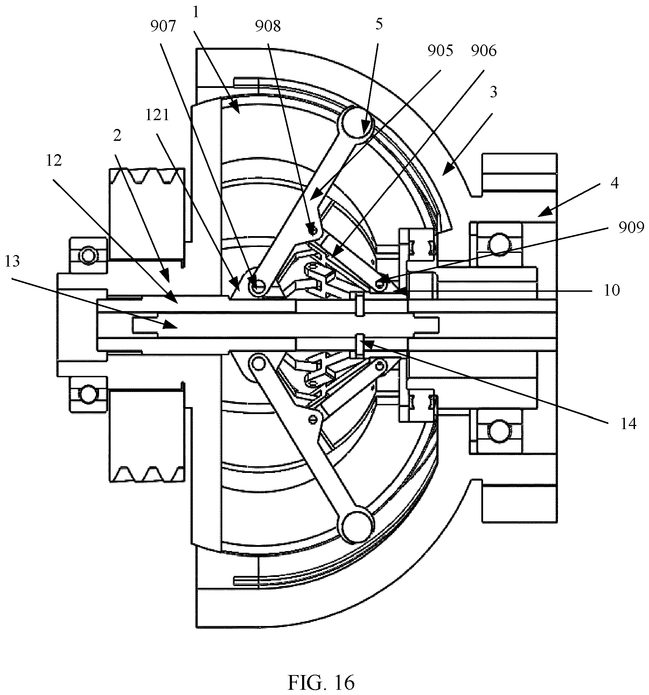

Embodiment 2: As shown in FIG. 16, the meshing member 5 is disposed on the inner rotating wheel 1, that is, the sliding groove 7 is disposed on the inner rotating wheel 1, and the fixed meshing teeth 8 are disposed on the outer rotating wheel 3.

Embodiment 3: The outer rotating wheel is provided with a first meshing member, and the inner rotating wheel is provided with a second meshing member. That is, the outer rotating wheel is provided with a first sliding groove for the first meshing member to slide, and the inner rotating wheel is provided with a second sliding groove for the second meshing member to slide.

The foregoing three embodiments can all achieve a continuously variable speed. However, in Embodiment 3, the outer rotating wheel 3 and the inner rotating wheel 1 are each provided with an meshing member, that is, both the first meshing member and the second meshing member need to be driven to slide between the first end and the second end, and it needs to be ensured that the inner rotating wheel 1 and the outer rotating wheel 3 are in a meshing state at all times. This increases difficulty of controlling the meshing member to slide, and increases manufacturing precision of the entire speed shifting apparatus. On the contrary, in Embodiment 1 and Embodiment 2, the meshing member 5 is provided on the inner rotating wheel 1 or the outer rotating wheel 3, and the other rotating wheel is provided with the fixed meshing teeth. This facilitates control and greatly reduces manufacturing difficulty. Therefore, in this application, the meshing member is preferably provided on the inner rotating wheel or on the outer rotating wheel.

In some implementations, a straight line on which the sliding groove is located and the rotation axis of the inner rotating wheel are located in a same plane. This facilitates implementation and reduces processing difficulty compared with designing the sliding groove as a curve.

The meshing member 5 has a plurality of implementable structures. Two embodiments are used below for description.

Embodiment 1: Referring to FIG. 5b and FIG. 6b, the meshing member 5 is of a spherical structure.

Embodiment 2: Referring to FIG. 7b and FIG. 8b, the meshing member 5 is of a meshing teeth-shaped structure.

In addition, the meshing member 5 may alternatively be of another structure. A specific structure of the meshing member 5 is not limited in this application, and any structure falls within the protection scope of this application.

Regardless of the structure of the meshing member 5, a shape of the sliding groove 7 needs to match that of the meshing member 5. For example, referring to FIG. 5b and FIG. 6b, when the meshing member 5 is of a spherical structure, a cross section of the sliding groove 7 is a part of a circular structure matching the spherical structure. For another example, referring to FIG. 7b and FIG. 7b, when the meshing member 5 is a meshing teeth-shaped structure, the sliding groove 7 is an involute groove matching the meshing teeth-shaped structure.

Because both the radial size of the inner rotating wheel 1 and the radial size of the outer rotating wheel 3 gradually decrease along the first end to the second end, that is, a circumference of a circular surface of the inner rotating wheel 1 at the second end is smaller than that of the circular surface of the inner rotating wheel 1 at the first end, similarly, a circumference of a circular surface of the outer rotating wheel 3 at the second end is smaller than that of the circular surface of the outer rotating wheel 3 at the first end.

During specific implementation, referring to FIG. 5a and FIG. 6a, and FIG. 7a and FIG. 8a, a groove depth of the sliding groove 7 gradually decreases along a direction from the first end to the second end. To be specific, referring to FIG. 6c and FIG. 8c, 7(A) is a sliding groove at the first end, 7(B) is a sliding groove at the second end, 1(A) is a structure of a cross section of the inner rotating wheel at the first end, and 1(B) is a structure of a cross section of the inner rotating wheel at the second end. A maximum cross section M at which the cross section of the sliding groove 7 is located at the second end is the same as the maximum cross section M of a cross section of the sliding groove 7 at the first end, except that a groove depth S2 of the sliding groove 7 at the second end is smaller than a groove depth S1 of the sliding groove 7 at the first end. Because the circumference of the circumferential surface of the inner rotating wheel 1 at the second end is less than that of the circumferential surface of the inner rotating wheel 1 at the first end, an objective of this design is to achieve internal meshing of the inner rotating wheel and the outer rotating wheel when the meshing member 5 slides to any position between the first end and the second end.

There are a plurality of meshing members 5 in the circumferential direction of the outer rotating wheel 3 or in the circumferential direction of the inner rotating wheel 1, it is necessary to make the plurality of meshing members 5 slide synchronously between the first end and the second end when changing the power transmission ratio between the inner rotating wheel 1 and the outer rotating wheel 3. Therefore, there two embodiments below in which the plurality of meshing members 5 can slide synchronously.

Embodiment 1: Each meshing member 5 is connected to a first drive source.

Embodiment 2: All the meshing members 5 are connected to a same first drive source, that is, one first drive source drives all the meshing members to slide synchronously. Using one drive source has the following two advantages: reduced manufacturing costs and ease of control. Therefore, in this application, it is preferable to use one first drive source to drive all the meshing members to slide synchronously.

The following provides a structure in which one first drive source drives all meshing members to slide synchronously. Certainly, another structure may also be used. This is not limited in this application.

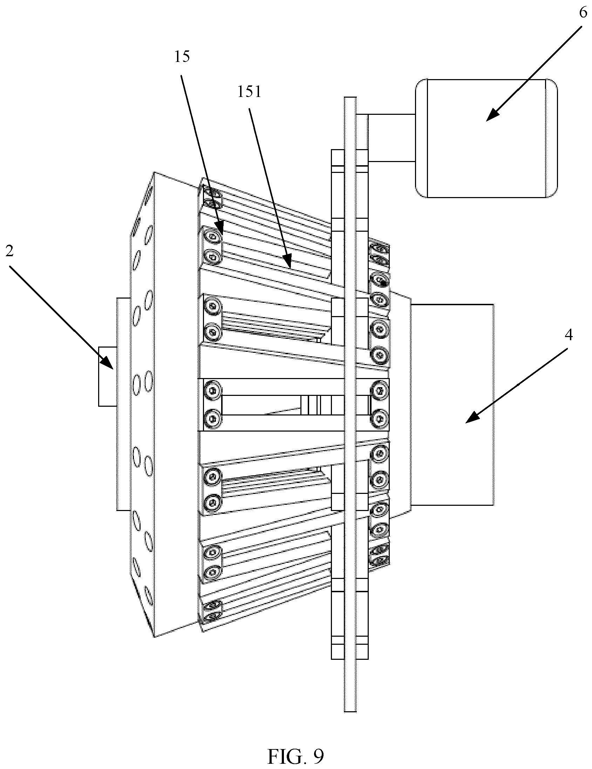

Referring to FIG. 9, FIG. 10, and FIG. 16, the speed shifting apparatus further includes a speed shifting rod 9 and an adjusting ring 10. There are a plurality of speed shifting rods 9, and the plurality of speed shifting rods 9 are in a one-to-one correspondence with the plurality of meshing members 5. The adjusting ring 10 is connected to the first drive source 6. The first drive source is capable of driving the adjusting ring 10 to move in a direction of the rotation axis of the outer rotating wheel. In other words, each meshing member 5 is connected to a corresponding speed shifting rod 9, the plurality of speed shifting rods 9 are connected to the adjusting ring 10, and the first drive source 6 drives the adjusting ring 10 to move, to drive the plurality of speed shifting rods 9 to move synchronously, to finally drive the plurality of meshing members 5 to slide synchronously in the sliding grooves.

In the foregoing embodiment, synchronous sliding of the plurality of meshing members can be achieved through only the plurality of speed shifting rods 9 and one adjusting ring. This simplifies the structure of the entire speed shifting apparatus.

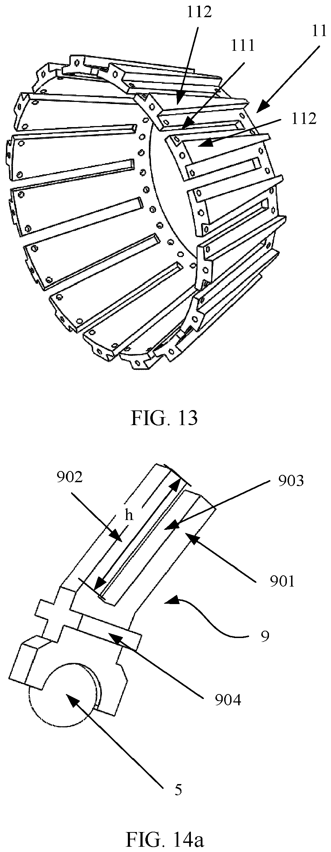

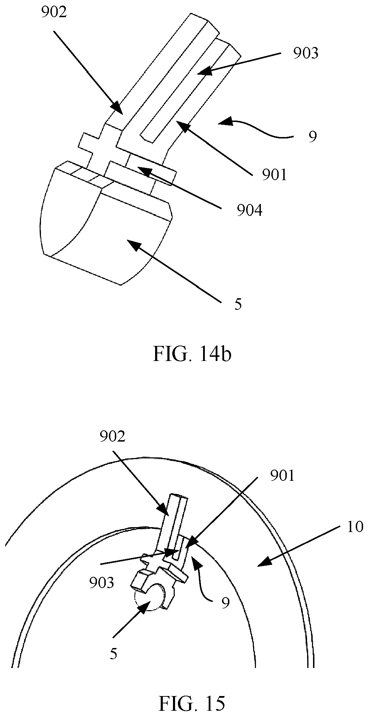

There are a plurality of manners in which the speed shifting rod 9 is connected to the meshing member 5. For example, the speed shifting rod 9 is movably connected to the meshing member 5. Referring to FIG. 14a, an end portion of the speed shifting rod 9 is provided with an inlay groove, and the meshing member 5 is clamped in the inlay groove. For another example, referring to FIG. 14b, the speed shifting rod 9 is fixedly connected to the meshing member 5. During specific implementation, the speed shifting rod 9 and the meshing member 5 may form an integrated structure.

There are two cases for a disposition position of the adjusting ring.

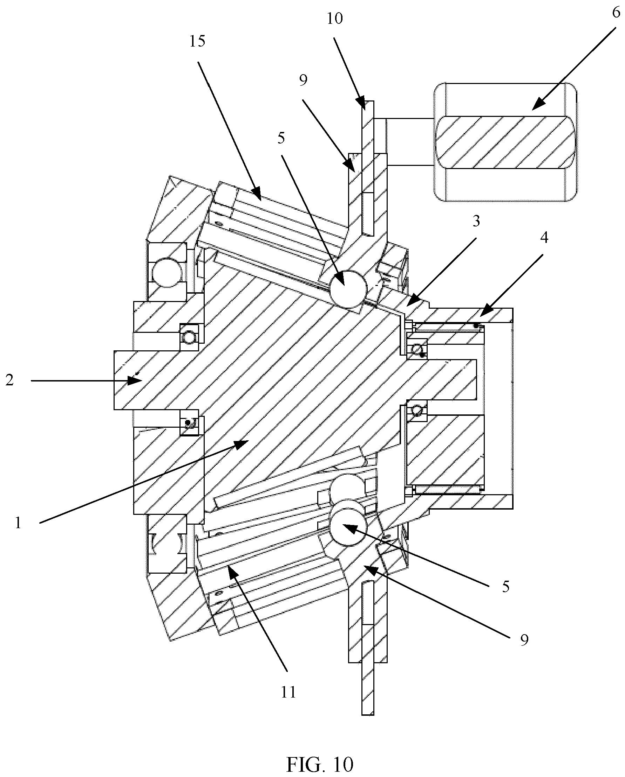

First implementation: Referring to FIG. 10, the adjusting ring 10 is sleeved outside the outer rotating wheel 3, a central axis of the adjusting ring 10 is coaxial with the rotation axis of the outer rotating wheel 3, the adjusting ring 10 is connected to the first drive source 6, and an axis of an output shaft of the first drive source 6 is parallel to the rotation axis of the outer rotating wheel 3. In Embodiment 1, the sliding groove is provided on the outer rotating wheel 3, as shown in FIG. 10.

In the first implementation, one end of any speed shifting rod 9 is connected to a corresponding meshing member 5, and the other end is connected to the adjusting ring 10. When the first drive source drives the adjusting ring 10 to move along the direction of the rotation axis of the outer rotating wheel 3, the speed shifting rod 9 moves synchronously with the adjusting ring 10 in the direction of the rotation axis of the outer rotating wheel. In this way, it can be ensured that when the first drive source drives the adjusting ring and all the speed shifting rods to move along the direction of the rotation axis of the outer rotating wheel 3, all the meshing members slide along the corresponding sliding grooves.

Second implementation: Referring to FIG. 16, the adjusting ring 10 is nested inside the inner rotating wheel 1, a central axis of the adjusting ring 10 is coaxial with the rotation axis of the inner rotating wheel 1, and the adjusting ring 10 is connected to the first drive source.

An axis of an output shaft of the first drive source is coaxial with the rotation axis of the inner rotating wheel. The first drive source is capable of driving the adjusting ring to move along the direction of the rotation axis of the inner rotating wheel. In Embodiment 2, the sliding groove 7 is provided on the inner rotating wheel 1.

In the second implementation, one end of any speed shifting rod 9 is connected to a corresponding meshing member 5, and the other end is connected to the adjusting ring 10. When the first drive source drives the adjusting ring 10 to move along the direction of the rotation axis of the inner rotating wheel, the speed shifting rod 9 moves synchronously with the adjusting ring 10 in the direction of the rotation axis of the inner rotating wheel. In this way, it can be ensured that when the first drive source drives the adjusting ring and all the speed shifting rods to move along the direction of the rotation axis of the inner rotating wheel, all the meshing members slide along the corresponding sliding grooves.

In the foregoing first implementation, when the meshing member 5 slides from the first end to the second end, the distance between the meshing member 5 and the rotation axis of the inner rotating wheel gradually decreases. To ensure smooth movement of the speed shifting rod connected to the meshing member, a distance from a position at which the speed shifting rod is connected to the meshing member to a position at which the speed shifting rod is connected to the adjusting ring gradually increases. There are a plurality of specific implementations in which the distance from the position at which the speed shifting rod is connected to the meshing member to the position at which the speed shifting rod is connected to the adjusting ring gradually increases. The specific implementations are described in detail below.

For example, the speed shifting rod 9 is a telescopic rod. To be specific, the distance from the position at which the speed shifting rod is connected to the meshing member to the position at which the speed shifting rod is connected to the adjusting ring gradually increases through a telescopic structure.

For another example, referring to FIG. 15, a speed shifting groove 903 is provided at one end of the speed shifting rod 9 close to the adjusting ring. A groove depth h (as shown in FIG. 14a) of the speed shifting groove 903 is greater than or equal to a distance H (as shown in FIG. 2) between the first end and the second end along a radial direction of the outer rotating wheel. The speed shifting groove 903 is formed by using a first stop block 901 and a second stop block 902 that are opposite to each other. To be specific, when the speed shifting rod 9 and the meshing member 5 connected to the speed shifting rod 9 move along the rotation axis of the outer rotating wheel 3, the position at which the speed shifting rod 9 is connected to the adjusting ring 10 can be adjusted by using the speed shifting groove 903.

In the foregoing first implementation, the adjusting ring 10 is relatively fixed to the output shaft of the first drive source 6, and the speed shifting rod 9 is capable of rotating around a circumferential direction of the adjusting ring 10. There are a plurality of structures in which the speed shifting rod 9 is capable of rotating around the circumferential direction of the adjusting ring 10.

Embodiment 1: Referring to FIG. 15, the speed shifting groove 903 is provided at the end of the speed shifting rod 9 close to the adjusting ring 10, and the adjusting ring 10 is clamped in the speed shifting groove 903 along a radial direction of the adjusting ring 10. The speed shifting rod 9 is slidably engaged with the adjusting ring 10 through the speed shifting groove 903, so that the speed shifting rod 9 is capable of rotating around the circumferential direction of the adjusting ring 10. Therefore, the speed shifting groove 903 provided at the end of the speed shifting rod 9 close to the adjusting ring 10 not only implements a gradual change in the distance from the position at which the speed shifting rod is connected to the meshing member to the position at which the speed shifting rod is connected to the adjusting ring, but also can implement rotation around the circumferential direction of the adjusting ring 10. In this way, two functions are implemented by using one structure, and the implementation is easy.

Embodiment 2: The speed shifting rod 9 is a telescopic rod, the end of the speed shifting rod 9 close to the adjusting ring 10 is connected to the adjusting ring 10 by using a connecting pin, and a guiding groove for the connecting pin to slide is provided in the circumferential direction of the adjusting ring 10. That is, rotation of the speed shifting rod 9 around the circumferential direction of the adjusting ring 10 is implemented by sliding of the connecting pin along the guiding groove.

In the foregoing first implementation, and when a part of the meshing member 5 extends to one side of the outer rotating wheel 3 away from the inner rotating wheel 1, that is, the part of the meshing member 5 extends to the outside of the outer rotating wheel 3, it is possible that all the speed shifting rods cannot move synchronously in the direction of the rotation axis of the outer rotating wheel, and consequently, all the meshing members cannot slide synchronously along the corresponding sliding grooves.

To cause all the meshing members to slide synchronously along the corresponding sliding grooves, referring to FIG. 10, the speed shifting apparatus further includes a rail ring 11. The rail ring 11 is relatively fixed to the outer rotating wheel 3. Referring to FIG. 13, a plurality of rail grooves 111 are provided along a circumferential direction of the rail ring 11. An extension direction of the rail groove 111 is consistent with an extension direction of the sliding groove. One end of any speed shifting rod away from the meshing member passes through a corresponding rail groove in sequence and is connected to the adjusting ring. In other words, all the speed shifting rods 9 are connected to the adjusting ring 10 after passing through the corresponding rail grooves, that is, the speed shifting rods are limited by the plurality of rail grooves 111 on the rail ring 11, so that all the speed shifting rods connected to the meshing members move synchronously along the rotation axis of the outer rotating wheel.

When the speed shifting rod 9 and the meshing member 5 rotate with the outer rotating wheel 3, a centrifugal force is generated, so that the speed shifting rod and the meshing member tend to move in a direction away from the outer rotating wheel. To prevent the speed shifting rod and the meshing member from moving in the direction away from the outer rotating wheel under action of the centrifugal force, the speed shifting apparatus further includes a limiting structure, and the limiting structure is configured to prevent the speed shifting rod from moving in a direction away from the rail ring. Because the speed shifting rod is connected to the meshing member, limiting of the speed shifting rod ensures limiting of the meshing member.

Referring to FIG. 9, FIG. 10, and FIG. 14a, the limiting structure includes a rail block 904 and a pressure plate 15. The rail block 904 is connected to and relatively fixed to the speed shifting rod. The rail block is located on one side of the rail ring 11 away from the outer rotating wheel 3. The rail block abuts against the rail ring. The pressure plate 15 is pressed on one side of the rail block away from the rail ring, and relatively fixed to the rail ring. The pressure plate is provided with an avoidance groove 151. An extension direction of the avoidance groove 151 is consistent with the extension direction of the rail groove. One end of the speed shifting rod away from the meshing member passes through the rail groove and the avoidance groove in sequence and is connected to the adjusting ring.

When the speed shifting rod 9 slides along the rail groove 111, to further ensure that the speed shifting rod 9 does not move along the circumferential direction of the rail ring 11, limiting blocks are disposed on two sides of the rail groove of the rail ring, and rail blocks are slidably disposed between the two opposite limiting blocks. Through engagement of the rail blocks and the limiting blocks, a movement path of the speed shifting rod is ensured. In addition, the pressure plate 15 may be disposed between the opposite limiting blocks, so that the pressure plate does not protrude because the pressure plate is disposed on an outer side of the rail ring, and appearance aesthetics is not affected.

In the foregoing second implementation, there are a plurality of structures in which the adjusting ring 10 is capable of rotating around the output shaft of the first drive source 6.

Embodiment 1: The adjusting ring 10 is sleeved outside the output shaft of the first drive source 6, and is connected to the output shaft of the first drive source 6 by using a connecting pin. A clamping groove is provided on a circumferential surface of the output shaft of the first drive source 6. The connecting pin is slidably disposed in the clamping groove. The adjusting ring 10 rotates along a circumferential direction of the output shaft of the first drive source 6 by using the connecting pin that rotates along the clamping groove. Through rotation of the connecting pin along the clamping groove, the speed shifting rod and the adjusting ring can be made to rotate synchronously around the output shaft of the first drive source. In addition, the connecting pin and the clamping groove that match each other are used, so that the structure is simple and implementation is easy.

Embodiment 2: A guide rail is provided in the circumferential direction of the adjusting ring 10, and a guiding groove engaged with the guide rail is provided in the circumferential direction of the output shaft of the first drive source 6. That is, the rotation of the adjusting ring around the output shaft of the first drive source 6 is implemented through engagement of the guide rail and the guiding groove.

Embodiment 3: A guiding groove is provided in the circumferential direction of the adjusting ring 10, and a guide rail engaged with the guiding groove is provided in the circumferential direction of the output shaft of the first drive source 6. That is, the rotation of the adjusting ring around the output shaft of the first drive source 6 is implemented through engagement of the guide rail and the guiding groove.

When the adjusting ring 10 is located inside the inner rotating wheel 1, and the plurality of speed shifting rods 9 are disposed, a mounting space in the inner rotating wheel 1 is relatively limited. When the first drive source 6 is disposed inside the inner rotating wheel 1, the structure is compact. This easily causes structural interference.

To avoid interference, referring to FIG. 16, the speed shifting apparatus further includes a shaft sleeve 12 and a sliding shaft 13. The shaft sleeve 12 is disposed inside the inner rotating wheel 1, and the shaft sleeve 12 is relatively fixed to the inner rotating wheel 1. An axis of the shaft sleeve 12 is coaxial with the rotation axis of the inner rotating wheel 1. The sliding shaft 13 is slidably disposed inside the shaft sleeve 12. The sliding shaft 13 is connected to the output shaft of the first drive source provided outside the inner rotating wheel 1.

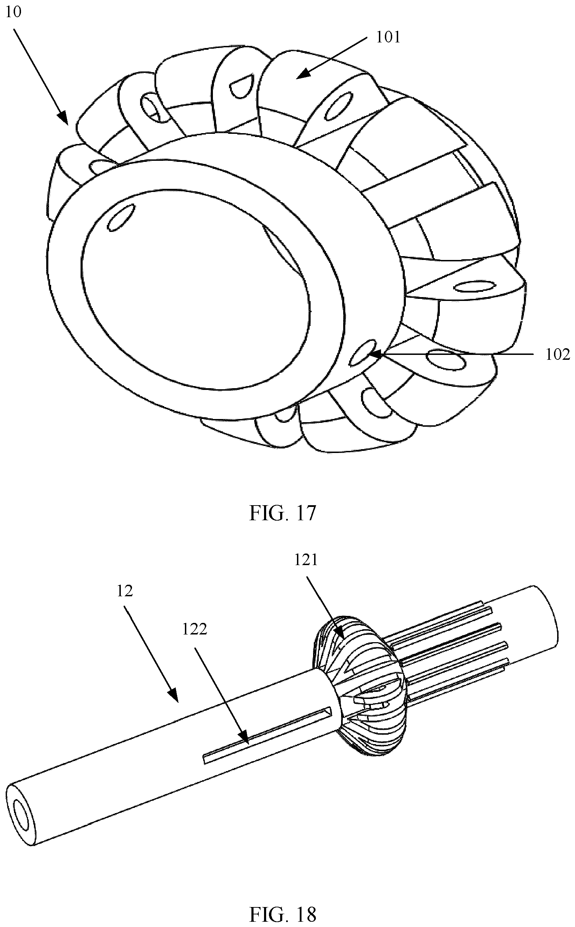

Referring to FIG. 16, FIG. 18, and FIG. 19, the adjusting ring 10 is sleeved outside the shaft sleeve 12 and is connected to the sliding shaft 13 by using a connecting pin 14 (as shown in FIG. 17, the adjusting ring 10 is provided with a pin hole 102 for the connecting pin 14 to pass through). The clamping groove 131 is provided in a circumferential direction of the sliding shaft 13. The shaft sleeve 12 is provided with a guiding groove 122 for the connecting pin 14 to move along an axial direction of the shaft sleeve 12. The moving sliding shaft 13 slides along the guiding groove 122 by using the connecting pin 14 to drive the adjusting ring 10 to move synchronously. A specific working principle is as follows: When the inner rotating wheel 1 and the outer rotating wheel 3 rotate, the shaft sleeve 12 rotates synchronously with the inner rotating wheel. Then, the adjusting ring 10 moves along the clamping groove 131 by using the connecting pin 14, so that the adjusting ring 10 rotates around the circumferential direction of the sliding shaft 13. Finally, it is ensured that the adjusting ring, the speed shifting rod, and all the meshing members rotate synchronously. When the output shaft of the first drive source 6 drives the sliding shaft 13 to move along the axial direction of the shaft sleeve 12, the connecting pin slides along the guiding groove 122, so that the adjusting ring 10 slides along the axial direction of the shaft sleeve 12.

In the foregoing second implementation, referring to FIG. 16, the speed shifting rod 9 includes a first connecting rod 905 and a second connecting rod 906 that are connected to each other in a hinged manner. One end of the first connecting rod 905 is connected to the meshing member 5. The other end of the first connecting rod 905 is connected to a fixing base 121 through a first hinged shaft 907 in a hinged manner. The fixing base 121 is relatively fixed to the shaft sleeve 13. One end of the second connecting rod 906 is connected to a middle part of the first connecting rod 905 through a second hinged shaft 908 in a hinged manner. The other end of the second connecting rod 906 is connected to the adjusting ring 10 through a third hinged shaft 909 in a hinged manner. Axes of the first hinged shaft 907, the second hinged shaft 908, and the third hinged shaft 909 are all perpendicular to a first plane. A straight line on which the first connecting rod is located is a first straight line. A plane in which the first straight line and the axis of the shaft sleeve are co-located is the first plane.

In addition, the sliding groove is an arc-shaped groove. A circle center of a circle in which the arc-shaped groove is located coincides with a rotation center of the first connecting rod relative to the fixing base. Because the first connecting rod may rotate around the fixing base through the first hinged shaft, setting the sliding groove as an arc-shaped groove and causing the circle center of the circle in which the arc-shaped groove is located to coincide with the rotation center of the first connecting rod relative to the fixing base ensures smooth rotation of the first connecting rod, and finally, the meshing member is driven to slide along the arc-shaped groove.

Referring to FIG. 17, a plurality of hinged supports 101 are provided in the circumferential direction of the adjusting ring 10, and an end portion of the second connecting rod 906 is connected to the hinged support 101 through the third hinged shaft in a hinged manner.

The first drive source 6 in this application may be a linear drive motor, a telescopic oil cylinder, a telescopic pneumatic cylinder, or another structure.

To facilitate connection of the inner rotating wheel 1 and the outer rotating wheel 3 to a driving structure for driving the inner rotating wheel 1 and the outer rotating wheel 3 to rotate, referring to FIG. 10, the speed shifting apparatus further includes a first rotating shaft 2 and a second rotating shaft 4. The first rotating shaft 2 is connected to the inner rotating wheel 1 and extends to the outside of the outer rotating wheel 3. An axis of the first rotating shaft 2 is coaxial with the rotation axis of the inner rotating wheel 1. The second rotating shaft 4 is connected to the outer rotating wheel 3 and extends to the outside of the outer rotating wheel 3. An axis of the second rotating shaft 4 is coaxial with the rotation axis of the outer rotating wheel 3.

The first rotating shaft 2 and the second rotating shaft 4 may be disposed on a same side of the inner rotating wheel or on two opposite sides (as shown in FIG. 10).

According to another aspect, an embodiment of this application further provides a transmission control method. The transmission control method is applied to the speed shifting apparatus provided in the foregoing embodiment. Either of the inner rotating wheel and the outer rotating wheel is an input wheel, and the other rotating wheel is an output wheel. The transmission control method includes:

when a rotation speed of the output wheel is greater than a preset rotation speed, controlling the meshing member 5 to slide in a direction toward the first end A of the sliding groove until the rotation speed of the output wheel is equal to the preset rotation speed; and

when the rotation speed of the output wheel is less than the preset rotation speed, controlling the meshing member 5 to slide in a direction toward the second end B of the sliding groove until the rotation speed of the output wheel is equal to the preset rotation speed.

In other words, the rotation speed of the output wheel is changed by driving the meshing member to slide between the first end and the second end. In addition, in the speed shifting apparatus, the outer rotating wheel and the inner rotating wheel transmit power through meshing. Compared with the existing friction transmission, the meshing transmission can achieve larger power transmission, and cause no slippage between the inner rotating wheel and the outer rotating wheel.

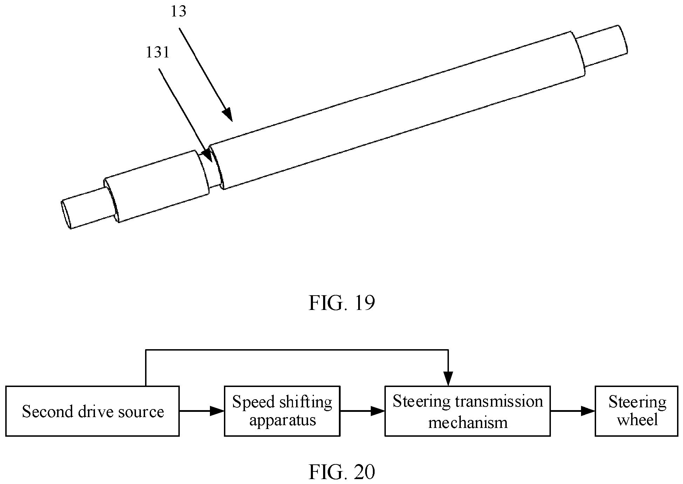

According to another aspect, an embodiment of this application provides a steering system. Referring to FIG. 20, the steering system includes a second drive source, a steering transmission mechanism, and the speed shifting apparatus provided in the foregoing embodiment. The second drive source drives the steering transmission mechanism to enable a steering wheel to steer. An input end of the steering transmission mechanism is connected to an output end of the second drive source. An output end of the steering transmission mechanism is connected to the steering wheel. Either of the inner rotating wheel and the outer rotating wheel is connected to the output end of the second drive source, and the other rotating wheel is connected to the input end of the steering transmission mechanism.

Because the steering system includes the speed shifting apparatus provided in the foregoing embodiment, when the speed shifting apparatus implements rotation of the inner rotating wheel and the outer rotating wheel through meshing transmission, compared with friction transmission, the meshing transmission can transmit large torque power, and is less prone to slippage.

According to another aspect, an embodiment of this application further provides a steering control method. The steering control method is applied to the steering system provided in the foregoing embodiment. The steering control method includes the following steps:

detecting steering torque of the output end of the second drive source; and

determining whether the steering torque is less than preset steering torque; and when the steering torque is less than the preset steering torque, controlling the meshing member to move in a direction approaching the first end of the sliding groove, to reduce the transmission ratio between the inner rotating wheel and the outer rotating wheel, until the steering torque is greater than or equal to the preset steering torque, and controlling the second drive source to drive the steering transmission mechanism, to drive the steering wheel to steer.

In other words, the steering torque of the output end of the second drive source is first detected. If the steering torque is less than the preset steering torque, the meshing member is then controlled to move in the direction approaching the first end of the sliding groove, until the steering torque is greater than or equal to the preset steering torque. That is, the steering torque is increased by using the speed shifting apparatus to ensure smooth steering of the steering wheel.

If the detected steering torque is greater than or equal to the preset steering torque, the second drive source is controlled to drive the steering transmission mechanism, to drive the steering wheel to steer. That is, the second drive source directly drives the steering transmission mechanism, to drive the steering wheel to perform a steering action.

Usually, the second drive source includes a first motor and a second motor, and an output end of the first motor and an output end of the second motor are both connected to the inner rotating wheel or the outer rotating wheel of the speed shifting apparatus, and are connected to the input end of the steering transmission mechanism. During specific implementation, one of the motors may fail.

The steering control system further includes: Before the detecting steering torque, the method further includes:

detecting an output power of the first motor and an output power of the second motor; and

detecting the steering torque when either of the first motor and the second motor has no output power; and when both the first motor and the second motor have output powers, controlling the steering transmission mechanism to drive the steering wheel to steer.

In other words, when both the first motor and the second motor have output powers, that is, when both the first motor and the second motor run normally, the steering torque does not need to be detected, and the second drive source directly drives the steering transmission mechanism, to drive the steering wheel to steer. When the first motor or the second motor has no output power, that is, when the first motor or the second motor fails, the steering torque is detected, to ensure normal steering of the steering wheel.

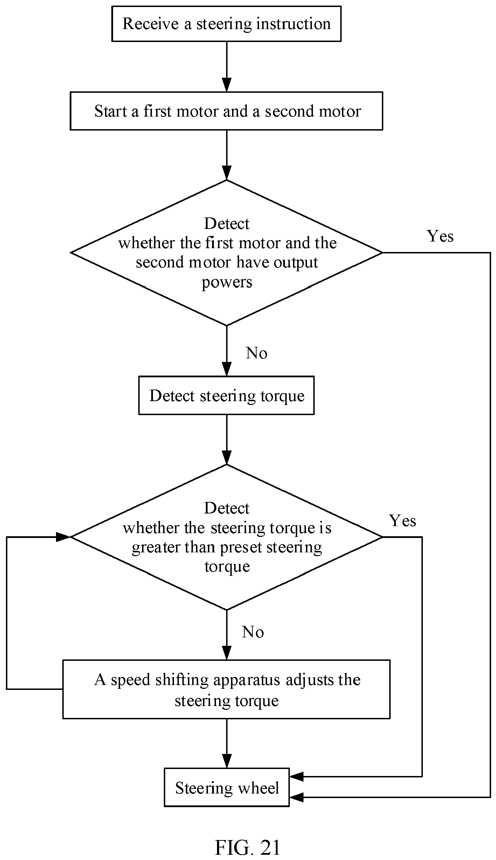

Referring to FIG. 21, a specific steering control method is provided. First, a steering instruction is received, a first motor and a second motor are started, and then whether the first motor and the second motor have output powers is detected. When both the first motor and the second motor have output powers, the steering transmission mechanism drives the steering wheel to steer. When the first motor or the second motor has no output power, the steering torque is detected, and whether the steering torque is greater than the preset steering torque is determined. When the steering torque is less than the preset steering torque, the speed shifting apparatus controls the meshing member to move in a direction approaching the first end of the sliding groove, until the steering torque is greater than or equal to the preset steering torque. When the steering torque is greater than or equal to the preset steering torque, the first motor and the second motor are controlled to drive the steering transmission mechanism, to drive the steering wheel to steer.

According to still another aspect, an embodiment of this application further provides a steering control method. The steering control method is applied to the steering system provided in the foregoing embodiment. The steering control method includes the following steps:

detecting a traveling speed of the steering wheel; and
determining whether the traveling speed is greater than a preset speed; and when the traveling speed is greater than the preset speed, controlling the meshing member to move in a direction approaching the second end of the sliding groove, to increase a transmission ratio between the inner rotating wheel and the outer rotating wheel, so that the traveling speed of the steering wheel is less than or equal to the preset speed.

In other words, when the traveling speed of the steering wheel is greater than the preset speed, the meshing member is controlled to move in the direction approaching the second end of the sliding groove, to increase the transmission ratio between the inner rotating wheel and the outer rotating wheel, and reduce torque. In this way, steering sensitivity of the steering wheel in a high-speed traveling state can be reduced, thereby improving a safety factor.

When it is determined that the traveling speed is less than or equal to the preset speed, a position of the meshing member is controlled, so that the transmission ratio between the inner rotating wheel and the outer rotating wheel is equal to 1. When the traveling speed of the steering wheel is less than or equal to the preset speed, the meshing member is controlled to slide, so that the transmission ratio between the inner rotating wheel and the outer rotating wheel is equal to 1, that is, the torque of the steering wheel is not changed.

In the descriptions of this specification, the described specific features, structures, materials, or characteristics may be combined in a proper manner in any one or more of the embodiments or examples.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A speed shifting apparatus, comprising:

an outer rotating wheel;
an inner rotating wheel, located inside the outer rotating wheel, wherein a rotation axis of the inner rotating wheel is parallel to and different from a rotation axis of the outer rotating wheel; and
a plurality of meshing members, located between opposite side surfaces of the inner rotating wheel and the outer rotating wheel and arranged along a circumferential direction of the inner rotating wheel or the outer rotating wheel, wherein
either of the outer rotating wheel and the inner rotating wheel is provided with a plurality of sliding grooves, the plurality of sliding grooves are in a one-to-one correspondence with the plurality of meshing members, the other rotating wheel is provided with fixed meshing teeth arranged along a circumferential direction of the other rotating wheel and used for meshing with the meshing members, and the fixed meshing teeth extend in a direction consistent with an extension direction of the sliding groove; and
the meshing member is capable of sliding along a corresponding sliding groove, and a distance between the meshing member and the rotation axis of the inner rotating wheel gradually decreases when the meshing member slides from a first end to a second end of the sliding groove.

2. The speed shifting apparatus according to claim 1, wherein along the first end to the second end of the sliding groove, both a radial size of the outer rotating wheel and a radial size of the inner rotating wheel gradually decrease, and along the first end to the second end of the sliding groove, a groove depth of the sliding groove gradually becomes shallower.

3. The speed shifting apparatus according to claim 1 or 2, further comprising:

a plurality of speed shifting rods, wherein the plurality of speed shifting rods are in a one-to-one correspondence with the plurality of meshing members; and
an adjusting ring, disposed inside the inner rotating wheel, wherein a central axis of the adjusting ring is coaxial with the rotation axis of the inner rotating wheel, the adjusting ring is connected to a first drive source, an axis of an output shaft of the first drive source is coaxial with the rotation axis of the inner rotating wheel, and the first drive source is capable of driving the adjusting ring to move along a direction of the rotation axis of the inner rotating wheel, wherein
the sliding groove is provided on the inner rotating wheel, one end of any speed shifting rod is connected to a corresponding meshing member, and the other end is connected to the adjusting ring; and when the first drive source drives the adjusting ring to move along the direction of the rotation axis of the inner rotating wheel, the speed shifting rod and the adjusting ring move synchronously along the direction of the rotation axis of the inner rotating wheel; and the speed shifting rod is relatively fixed to the adjusting ring along a circumferential direction of the adjusting ring, and the adjusting ring and the speed shifting rod is capable of rotating synchronously around a circumferential direction of the output shaft of the first drive source.

4. The speed shifting apparatus according to claim 3, further comprising:

a shaft sleeve, disposed inside the inner rotating wheel, wherein the shaft sleeve is relatively fixed to the inner rotating wheel, and an axis of the shaft sleeve is coaxial with the rotation axis of the inner rotating wheel; and
a sliding shaft, slidably disposed inside the shaft sleeve, wherein the sliding shaft is connected to the output shaft of the first drive source, the adjusting ring is rotatably sleeved outside the shaft sleeve and is connected to the sliding shaft by using a connecting pin, a first end of the connecting pin is relatively fixed to the adjusting ring, and a clamping groove for a second end of the connecting pin to slide is provided in a circumferential direction of the sliding shaft; the connecting pin rotates along the clamping groove when the speed shifting rod and the adjusting ring rotate synchronously around the shaft sleeve; the shaft sleeve is provided with a guiding groove for the second end of the connecting pin to move along an axial direction of the shaft sleeve; the connecting pin moves along the guiding groove when the first drive source drives the sliding shaft to move along the axial direction of the shaft sleeve, so that the adjusting ring and the speed shifting rod move synchronously along the axial direction of the shaft sleeve; and the first end of the connecting pin is opposite to the second end of the connecting pin.

5. The speed shifting apparatus according to claim 4, wherein the speed shifting rod comprises:

a first connecting rod, wherein one end of the first connecting rod is connected to the meshing member, the other end of the first connecting rod is connected to a fixing base through a first hinged shaft in a hinged manner, and the fixing base is relatively fixed to the shaft sleeve; and
a second connecting rod, wherein one end of the second connecting rod is connected to a middle part of the first connecting rod through a second hinged shaft in a hinged manner, and the other end of the second connecting rod is connected to the adjusting ring through a third hinged shaft in a hinged manner, axes of the first hinged shaft, the second hinged shaft, and the third hinged shaft are all perpendicular to a first plane, a straight line on which the first connecting rod is located is a first straight line, and a plane in which the first straight line and the axis of the shaft sleeve are co-located is the first plane, wherein
the sliding groove is an arc-shaped groove, and a circle center of a circle in which the arc-shaped groove is located coincides with a rotation center of the first connecting rod relative to the fixing base.

6. The speed shifting apparatus according to claim 1 or 2, further comprising:

a plurality of speed shifting rods, wherein the plurality of speed shifting rods are in a one-to-one correspondence with the plurality of meshing members; and
an adjusting ring, sleeved outside the outer rotating wheel, wherein a central axis of the adjusting ring is coaxial with the rotation axis of the outer rotating wheel, the adjusting ring is connected to a first drive source, an axis of an output shaft of the first drive source is parallel to and different from the rotation axis of the outer rotating wheel, and the first drive source is capable of driving the adjusting ring to move along a direction of the rotation axis of the outer rotating wheel, wherein

the sliding groove is provided on the outer rotating wheel, one end of any speed shifting rod is connected to a corresponding meshing member, and the other end is connected to the adjusting ring; and when the first drive source drives the adjusting ring to move along the direction of the rotation axis of the outer rotating wheel, the speed shifting rod and the adjusting ring move synchronously along the direction of the rotation axis of the outer rotating wheel; and the adjusting ring is relatively fixed to the output shaft of the first drive source, and the speed shifting rod is capable of rotating around a circumferential direction of the adjusting ring.

7. The speed shifting apparatus according to claim 6, wherein a speed shifting groove is provided at one end of the speed shifting rod close to the adjusting ring, a groove depth of the speed shifting groove is greater than or equal to a distance between the first end and the second end along a radial direction of the outer rotating wheel, the adjusting ring is clamped in the speed shifting groove along a radial direction of the adjusting ring, and the speed shifting rod is slidably engaged with the adjusting ring through the speed shifting groove, so that the speed shifting rod is capable of rotating along the circumferential direction of the adjusting ring.

8. The speed shifting apparatus according to claim 6 or 7, wherein a part of the meshing member extends to one side of the outer rotating wheel away from the inner rotating wheel; and

the speed shifting apparatus further comprises:
a rail ring, wherein the rail ring is relatively fixed to the outer rotating wheel, a plurality of rail grooves are provided along a circumferential direction of the rail ring, an extension direction of the rail groove is consistent with the extension direction of the sliding groove, and one end of any speed shifting rod away from the meshing member passes through a corresponding rail groove in sequence and is connected to the adjusting ring.

9. The speed shifting apparatus according to claim 8, wherein a limiting structure is disposed at a position at which the speed shifting rod is engaged with the rail ring, and the limiting structure is configured to prevent the speed shifting rod from moving in a direction away from the rail ring.

10. The speed shifting apparatus according to claim 9, wherein the limiting structure comprises:

a rail block, connected to and relatively fixed to the speed shifting rod, wherein the rail block is located on one side of the rail ring away from the outer rotating wheel, and the rail block abuts against the rail ring; and
a pressure plate, pressed on one side of the rail block away from the rail ring, and relatively fixed to the rail ring, wherein the pressure plate is provided with an avoidance groove, an extension direction of the avoidance groove is consistent with the extension direction of the rail groove, and one end of the speed shifting rod away from the meshing member passes through the rail groove and the avoidance groove in sequence and is connected to the adjusting ring.

11. The speed shifting apparatus according to any one of claims 1 to 10, further comprising:

a first rotating shaft, connected to the inner rotating wheel and extending to the outside of the outer rotating wheel, wherein an axis of the first rotating shaft is coaxial with the rotation axis of the inner rotating wheel; and
a second rotating shaft, connected to the outer rotating wheel and extending to the outside of the outer rotating wheel, wherein an axis of the second rotating shaft is coaxial with the rotation axis of the outer rotating wheel.

12. A transmission control method, wherein the transmission control method is applied to the speed shifting apparatus according to any one of claims 1 to 11, wherein either of the inner rotating wheel and the outer rotating wheel is an input wheel, and the other rotating wheel is an output wheel; and the transmission control method comprises:

when a rotation speed of the output wheel is greater than a preset rotation speed, controlling the meshing member to slide in a direction toward the first end of the sliding groove until the rotation speed of the output wheel is equal to the preset rotation speed; and
when the rotation speed of the output wheel is less than the preset rotation speed, controlling the meshing member to slide in a direction toward the second end of the sliding groove until the rotation speed of the output wheel is equal to the preset rotation speed.

13. A steering system, comprising:

a second drive source;
a steering transmission mechanism, wherein the second drive source drives the steering transmission mechanism to enable a steering wheel to steer, an input end of the steering transmission mechanism is connected to an output end of the second drive source, and an output end of the steering transmission mechanism is connected to the steering wheel; and
a speed shifting apparatus, wherein the speed shifting apparatus is the speed shifting apparatus according to any one of claims 1 to 11, either of the inner rotating wheel and the outer rotating wheel is connected to the output end of the second drive source, and the other rotating wheel is connected to the input end of the steering transmission mechanism.

14. A steering control method, wherein the steering control method is applied to the steering system according to claim 13, and the steering control method comprises:

detecting steering torque of the output end of the second drive source; and
determining whether the steering torque is less than preset steering torque; and when the steering torque is less than the preset steering torque, controlling the meshing member to move in a direction approaching the first end of the sliding groove, to reduce a transmission ratio between the inner rotating wheel and the outer rotating wheel, until the steering torque is greater than or equal to the preset steering torque, and controlling the second drive source to drive the steering transmission mechanism, to drive the steering wheel to steer.

15. The steering control method according to claim 14, wherein when it is detected that the steering torque is greater than or equal to the preset steering torque, the second drive source is controlled to drive the steering transmission mechanism, to drive the steering wheel to steer.

16. The steering control method according to claim 14 or 15, wherein the second drive source comprises a first motor and a second motor, and an output end of the first motor and an output end of the second motor are both connected to the inner rotating wheel or the outer rotating wheel of the speed shifting apparatus and are connected to an input end of the steering transmission mechanism; and before the detecting steering torque, the method further comprises:

detecting an output power of the first motor and an output power of the second motor;
detecting the steering torque when either of the first motor and the second motor has no output power; and
when both the first motor and the second motor have output powers, controlling the second drive source to drive the steering transmission mechanism, to drive the steering wheel to steer.

17. A steering control method, wherein the steering control method is applied to the steering system according to claim 13, and the steering control method comprises:

detecting a traveling speed of the steering wheel, and determining whether the traveling speed is greater than a preset speed; and
when the traveling speed is greater than the preset speed, controlling the meshing member to move in a direction approaching the second end of the sliding groove, to increase a transmission ratio between the inner rotating wheel and the outer rotating wheel, so that the traveling speed of the steering wheel is less than or equal to the preset speed.

18. The steering control method according to claim 17, wherein when it is determined that the traveling speed is less than or equal to the preset speed, controlling a position of the meshing member, so that the transmission ratio between the inner rotating wheel and the outer rotating wheel is equal to 1.

FIG. 1a

FIG. 1b

FIG. 2

FIG. 3a

FIG. 3b

FIG. 4

FIG. 5a

FIG. 5b

FIG. 6a

FIG. 6b

FIG. 6c

FIG. 7a

FIG. 7b

FIG. 8a

FIG. 8b

FIG. 8c

FIG. 9

FIG. 10

FIG. 11

FIG. 12

FIG. 13

FIG. 14a

FIG. 14b

FIG. 15

FIG. 16

10

101

102

FIG. 17

121

12

122

FIG. 18

13

131

FIG. 19

| Second drive source | → | Speed shifting apparatus | → | Steering transmission mechanism | → | Steering wheel |

FIG. 20

```
┌─────────────────────────────────────┐
│     Receive a steering instruction    │
└─────────────────────────────────────┘
                    │
                    ▼
┌─────────────────────────────────────┐
│   Start a first motor and a second motor │
└─────────────────────────────────────┘
                    │
                    ▼
              Detect
      whether the first motor and the         Yes
         second motor have output    ──────────────┐
                 powers                            │
                    │                              │
                    │ No                           │
                    ▼                              │
        ┌───────────────────────┐                 │
        │  Detect steering torque │                │
        └───────────────────────┘                 │
                    │                              │
                    ▼                              │
    ┌──►       Detect                              │
    │   whether the steering torque is    Yes      │
    │     greater than preset steering ──────────┐ │
    │              torque                        │ │
    │                 │                          │ │
    │                 │ No                        │ │
    │                 ▼                          │ │
    │  ┌──────────────────────────────────┐     │ │
    └──│ A speed shifting apparatus adjusts the │  │ │
       │           steering torque          │     │ │
       └──────────────────────────────────┘     │ │
                     │                           │ │
                     ▼                           │ │
              ┌────────────────┐◄────────────────┘ │
              │  Steering wheel │◄──────────────────┘
              └────────────────┘
```

FIG. 21

## INTERNATIONAL SEARCH REPORT

| International application No. |
|---|
| **PCT/CN2020/078465** |

**A. CLASSIFICATION OF SUBJECT MATTER**

F16H 3/42(2006.01)i; F16H 3/76(2006.01)i; F16H 59/06(2006.01)i

According to International Patent Classification (IPC) or to both national classification and IPC

**B. FIELDS SEARCHED**

Minimum documentation searched (classification system followed by classification symbols)

F16H

Documentation searched other than minimum documentation to the extent that such documents are included in the fields searched

Electronic data base consulted during the international search (name of data base and, where practicable, search terms used)

CNABS, CNKI, VEN: 偏心, 轴, 锥, 平行, 无级变速, eccentrical, continu+ and var continuous+ w variable w transmission, CVT, parallel, taper, cone

**C. DOCUMENTS CONSIDERED TO BE RELEVANT**

| Category* | Citation of document, with indication, where appropriate, of the relevant passages | Relevant to claim No. |
|---|---|---|
| A | EP 3425238 A1 (KONTOPOULOS GRIGORIOS et al.) 09 January 2019 (2019-01-09) description, paragraphs [0022]-[0042], and figures 1-20 | 1-18 |
| A | JP 2006112511 A (NISSAN MOTOR) 27 April 2006 (2006-04-27) entire document | 1-18 |
| A | WO 03064887 A2 (O&#39HORA GERARD M) 07 August 2003 (2003-08-07) entire document | 1-18 |
| A | CN 203641427 U (CHEN, Shuguang) 11 June 2014 (2014-06-11) entire document | 1-18 |
| A | DE 19640358 A1 (NUSSER JOSEF) 22 January 1998 (1998-01-22) entire document | 1-18 |
| A | DE 102015016906 A1 (KRAUSS DIETER et al.) 29 June 2017 (2017-06-29) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2020** | **16 December 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/078465**

| Patent document cited in search report | | | Publication date (day/month/year) | Patent family member(s) | | | Publication date (day/month/year) |
|---|---|---|---|---|---|---|---|
| EP | 3425238 | A1 | 09 January 2019 | None | | | |
| JP | 2006112511 | A | 27 April 2006 | None | | | |
| WO | 03064887 | A2 | 07 August 2003 | AU | 2003212843 | A1 | 02 September 2003 |
| | | | | US | 6709355 | B2 | 23 March 2004 |
| | | | | WO | 03064887 | A3 | 05 February 2004 |
| | | | | US | 2003144105 | A1 | 31 July 2003 |
| CN | 203641427 | U | 11 June 2014 | None | | | |
| DE | 19640358 | A1 | 22 January 1998 | None | | | |
| DE | 102015016906 | A1 | 29 June 2017 | DE | 102015016906 | B4 | 07 June 2018 |
| | | | | DE | 202015008913 | U1 | 22 June 2016 |

Form PCT/ISA/210 (patent family annex) (January 2015)